Europäisches Patentamt

European Patent Office

Office européen des brevets

(19)

(11) Publication number: **0 055 079**
**A2**

(12) # EUROPEAN PATENT APPLICATION

(21) Application number: **81305920.1**

(22) Date of filing: **17.12.81**

(51) Int. Cl.³: **G 09 B 9/08**

(30) Priority: **18.12.80 US 217588**

(43) Date of publication of application: **30.06.82**
**Bulletin 82/26**

(84) Designated Contracting States: **DE FR GB NL**

(71) Applicant: **CAE Electronics Ltd., 8585 Cote de Liesse, Montreal Quebec H4T 1G6 (CA)**

(72) Inventor: **Lam, Wim J., Engelandlaan 582, NL-2034 HA Haarlem (NL)**
Inventor: **de Vries, Luitzen, Top Naefflaan 19, Amstelveen (NL)**
Inventor: **McKinnon, Gorden Murdoch, 3811 Harvard Avenue, Montreal Quebec, H4A 2WA (CA)**
Inventor: **Baribeau, Jean Joseph, 3030 Savard, St. Laurent Quebec (CA)**

(74) Representative: **Gillam, Francis Cyril et al, Sanderson & Co. 97 High Street, Colchester Essex C01 1TH (GB)**

(54) Hydraulic drive system for pneumatic cushions used in seat to provide motion simulation.

(57) A seat 3 for use in a vehicle simulator which seat includes at least one pneumatic cushion 5 and a bellows arrangement 9 for controlling the pressure in the cushion, and thus the level of the top surface of the cushion. The bellows arrangement 9 and the cushion 5 together define a closed volume system. A piston and cylinder 15 is connected to a rod 17 which serves to expand or contract the bellows in accordance with signals generated by a controller 21 supplied to a servovalve 19 for the piston and cylinder 15. Typically, the seat 3 has four seat cushions 5 and four back-rest cushions 5, each of which cushions 5 has its own respective bellows pressure-control arrangement, whereby the top surface of any selected cushion may be caused to rise or fall, thereby feeding motion cues to a person sitting in the seat.

# HYDRAULIC DRIVE SYSTEM FOR PNEUMATIC CUSHIONS
## USED IN SEAT TO PROVIDE MOTION SIMULATION

The invention relates to a seat for use in a vehicle simulator which seat has at least one pneumatic cushion and means for controlling the pressure in that cushion, and thus the level of the top surface of the cushion.

It is known in the art to provide on air-craft simulators with a seat which provides motion cues to a pilot by varying the pressure in one or more of a plurality of pneumatic cushions which form the seat. Such seats are shown, for example, in U.S. Patent Nos. 3,097,436, Gaucher, issued July 16, 1963; 3,270,440, Radosevic, Jr., issued September 6, 1966; 3,983,640, Cardullo et al, issued October 5, 1976; and 4,030,207, Kron, issued June 21, 1977.

U.S. Patent No. 3,097,436 teaches a seat for an aircraft simulator which includes fluid pressure pouches with means for varying the pressures in selected pouches. The pressure is varied by providing fluid from a fluid supply to the pouches, or by drawing fluid from the pouches back to the fluid supply. U.S. Patent No. 3,270,440 teaches a seat with inflatable cushions with a plurality of air cells. A hydraulic actuator operates an air cylinder to vary the pressure in the cells.

U.S. Patents Nos. 3,983,640 and 4,030,207 both teach the use of bellows. However, in both of these patents, the bellows constitute part of the "air cells" of the seats. They do not constitute a part of the means for controlling the air pressure in the seats.

In all of the above-mentioned Specifications, which exemplify the state of the art, in order to increase the pressure in the cushions, air is drawn from a source and pumped into the cushions. In order to reduce the pressure, a vacuum is drawn to remove air from the cushions. Because of this, the response time of the prior art seats, especially in the pressure reducing stage, is slow.

It is therefore a primary object of this invention to provide a seat for use in a vehicle simulator which at least reduces the above-stated problem of the prior art seats, and which thus has a faster response time.

Accordingly, this invention provides a seat of the described type for use in a vehicle simulator characterised by the controlling means and the cushion together defining a closed system.

Most preferably, the controlling means comprises a pneumatic bellows connected to the cushion to be controlled, and a piston-and-cylinder arrangement having a movable rod member, the free end of the rod member being attached to the bellows whereby the volume of the bellows is expanded/ compressed upon motion of the rod member.

Advantageously, the seat has a plurality of cushions each having a respective separate means for controlling the pressure therein.

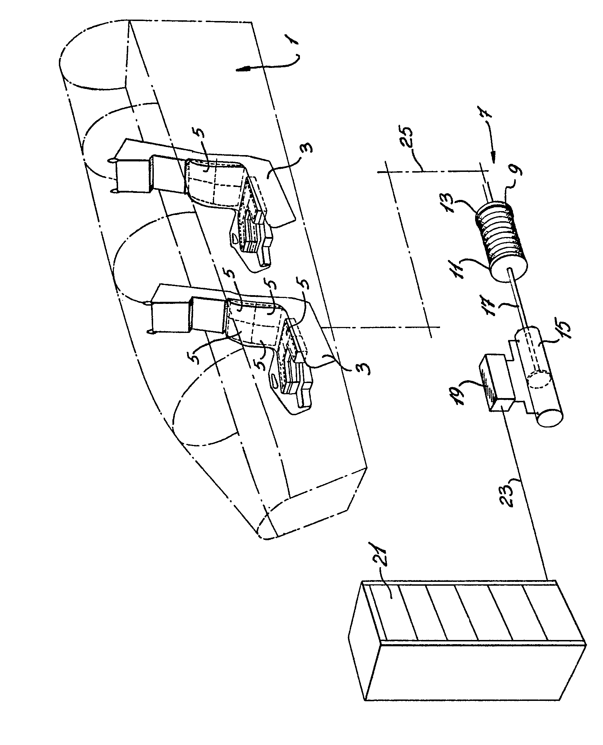

Solely by way of example of this invention, one specific embodiment thereof will now be described in detail, referring to the accompanying drawing, which drawing illustrates the embodiment of the invention.

Referring to the drawing, there is illustrated generally at 1 a simulator which includes at least one seat 3 (two are shown in the drawing) having a plurality of pneumatic cushions 5. In the drawing, eight cushions are illustrated, four on the seat and four on the back. However, more or less cushions could be used as required.

Each cushion includes a system, illustrated generally at 7, for controlling the pressure in that cushion, and thus the level of the top surface of the cushion. Only one system is shown in the drawing, but as will be appreciated, in an actual simulator a separate system would be attached to each one of the cushions.

The control system includes a variable volume element which is shown in the drawing as an expandable/compressible container, namely, a pneumatic bellows 9. The pneumatic bellows includes end plates 11 and 13. The system 7 also includes a means for varying the volume of said variable volume element, illustrated in the drawing as a means for expanding/compressing said container, namely, a hydraulic piston and cylinder arrangement 15. Movable rod 17, extending out of the cylinder, is attached to end plate 11 whereby the volume of the pneumatic bellows is expanded/contracted by the motion of the rod 17. The hydraulic cylinder is driven by a means 19 which in this specific embodiment, constitutes a servovalve. Simulator system control signals, which may be derived from an analogue systems control cabinet 21, are passed to the servovalve 19 through a conductor 23. As will be appreciated, there will be a separate conductor for each servovalve of each cushion pressure control system.

A pipe means 25 extends from an opening in the end plate 13 of each pressure control system to an opening in the respective cushion 5 which said control system controls. The pipe means 25 communicates the interior of the bellows with the interior of its respective cushion.

In operation, the seat in accordance with the invention works as follows:

When the servovalve 19 receives a signal to increase pressure in its respective cushion, it forces the piston of the piston and cylinder arrangement 15 to move outwardly so that the volume of the bellows 9 is compressed. This will increase the pressure in the associated seat and the level of the top surface of the cushion will rise.

When the servovalve receives a signal to decrease pressure in a cushion, the piston of the piston and cylinder arrangement moves inwardly into the cylinder whereby the volume of the bellows is expanded. This will decrease the pressure in the associated cushion and the level of the top surface of the cushion will fall.

As can be seen, the pneumatic cushion and the bellows form, between them, a closed volume which encloses a fixed volume of air. In order to increase or decrease pressure in any cushion, it is merely necessary to move air respectively either into or out of the cushion. However, as the movement of air takes place within a closed volume, the air does not have to be pumped into the cushion to increase pressure, nor is it necessary to draw a vacuum in order to pull air out of the cushion to decrease pressure in that cushion. The combination of the closed volume and the hydraulic cylinder varying this volume provides a faster response time than is available with prior art devices.

Although the variable volume element has been illustrated in the drawing as a bellows, it will be appreciated that other variable volume elements could be used. Thus, a second cylinder could be disposed in place of the bellows 9 wherein the rod 17 of the hydraulic cylinder 15 would be attached to the rod replacing the pneumatic bellows. The closed volume defined by the pneumatic cushion and the cylinder replacing the bellows would be increased and decreased as the rod of the second cylinder is pulled outwardly or inwardly in its cylinder. Thus, the cylinder replacing the pneumatic bellows would be a driven, rather than a driving, piston and cylinder arrangement.

- 6 -

## CLAIMS.

1. A seat for use in a vehicle simulator, which seat has at least one pneumatic cushion and means for controlling the pressure in said cushion and thus the level of the top surface of said cushion, characterised in that the controlling means (9,15) and the cushion (5) together define a closed volume system.

2. A seat according to claim 1, further characterised in that the controlling means comprises a variable volume element (9) and means (15,19) for varying the volume of the variable volume element.

3. A seat according to claim 2, characterised in that the variable volume element comprises an expandable/compressible container (9) and the means (15,19) for varying comprises means (15) for expanding/compressing the container.

4. A seat according to claim 3, characterised in that said container comprises a pneumatic bellows (9) having two end plates (11,13) and the means for varying comprises a piston and cylinder arrangement (15) having a movable rod member (17), the free end of the rod member (17) being attached to one of said end plates (11) whereby the volume of the bellows (9) is expanded/compressed by the motion of the rod member (17).

5. A seat according to any of claims 2 to 4, further characterised in that there is means (25) communicating the interior of the variable volume element (9) with the interior of the cushion (5).

6. A seat according to claim 5, further characterised in that the communicating means (25) comprises pipe means extending from an opening in the variable volume element (9) to an opening in the cushion (5).

7. A seat according to any of claims 2 to 6, further characterised in that there is a control system for the vehicle simulator, which control system provides signals for driving the means (15,19) for varying the volume of the variable volume element.

8. A seat according to any of the preceding claims, further characterised in that the seat (3) has a plurality of cushions (5), each cushion (5) having a respective means for controlling the pressure therein which is connected thereto.

0055079